## Europäisches Patentamt
## European Patent Office
## Office européen des brevets

(19)

(11) Veröffentlichungsnummer: **0 213 392**
**B1**

(12) **EUROPÄISCHE PATENTSCHRIFT**

(45) Veröffentlichungstag der Patentschrifft:
28.02.90

(51) Int. Cl. ⁵: **G 21 C 17/10**

(21) Anmeldenummer: **86110399.2**

(22) Anmeldetag: **28.07.86**

(54) Gerät zur Montage von trockenen LVD-Lanzen und zum Spülen von Lanzengehäuserohren in Siedewasserreaktoren.

(30) Priorität: **09.08.85 DE 3528723**

(43) Veröffentlichungstag der Anmeldung:
**11.03.87 Patentblatt 87/11**

(45) Bekanntmachung des Hinweises auf die Patenterteilung:
**28.02.90 Patentblatt 90/09**

(84) Bennante Vertragsstaaten:
**DE SE**

(56) Entgegenhaltungen:
**DE-A-2 817 830**
**DE-A-2 832 122**

**NUCLEAR ENGINEERING INTERNATIONAL, Band 29, Nr. 356, Juni 1984, Seiten 35,36, Sutton, Surrey, GB; "Cleaning the thimble guide-tubes at Bugey"**

(73) Patentinhaber: **Siemens Aktiengesellschaft**
**Wittelsbacherplatz 2**
**D-8000 München 2 (DE)**

(72) Erfinder: **Zahn, Artur**
**Goethestrasse 6**
**D-8751 Bessenbach (DE)**
Erfinder: **Hannappel, Karl**
**Wiesthaler Strasse 6**
**D-8771 Wiesthal (DE)**

LIBERGRAF, STOCKHOLM 1990

2

## Beschreibung

Die Erfindung betrifft ein Gerät zum Spülen eines Lanzengehäuserohres und zum Ausrichten einer Leistungsverteilungsdetektor trockenen LVD-Lanze in einem Reaktordruckbehälter eines Siedewasserreaktors, die mit einer druckdichten Lanzendurchführung aus einem Abschlußflansch am Lanzengehäuserohr des Reaktordruckbehälters teilweise herausragt.

Für die Überwachung und Regelung von Kernkraftwerken ist die Neutronenflußdichte im Reaktorkern eine wichtige Kenngröße. Sie wird durch Detektoren gemessen, wobei jeweils vier Detektoren mit einem umhüllenden Stützrohr eine sogenannte LVD-Lanze bilden. Beim Einbau werden diese Lanzen bei geöffnetem, geflutetem Reaktordruckbehälter in den zum Teil entladenen Kern vom Greifer eines Hebezeuges vertikal eingesetzt und von nach oben federnden Verriegelungszapfen am oberen Lanzenende in einer Halterung gehalten. Danach ragt das untere Lanzenende mit einer druckdichten Durchführung und einem Lanzenschutzrohr aus einem Abschlußflansch am Lanzengehäuserohr des Reaktordruckbehälters teilweise heraus. Ein anmontiertes Gehäuse verhindert ein Auslaufen des Reaktorwassers während der Montage.

Es sind verschiedenartig aufgebaute Instrumentierungslanzen bekannt. Die bisher am häufigsten eingesetzte Lanze ist die nasse LVD-Lanze. Sie bleibt nur wenige Jahre funktionsfähig und muß danach komplett ausgebaut und verschrottet werden. Deshalb wird angestrebt, die nassen LVD-Lanzen durch einen relativ neuen Lanzentyp, die trockene LVD-Lanze, zu ersetzen, die eine vorteilhaft extrem lange Funktionsdauer hat. Die trockenen LVD-Lanzen brauchen daher nicht ausgewechselt zu werden.

Eine Meßlanze für Siedewasserkernreaktoren ist aus der DE-A-2 832 122 bekannt. Dabei weist die Lanze ein Lanzenhüllrohr auf, das durch Verlängerungsstücke verlängerbar ist. Um einen druckfesten Abschluß zwischen dem Lanzenführungsrohr und Fingerhutrohren der Lanze zu gewährleisten, die sich im Führungsrohr befinden, ist ein erstes Verlängerungsteil vorgesehen. Dieses erste Verlängerungsteil weist Bohrungen für die Fingerhutrohre auf und ist im übrigen massiv ausgebildet. Die in dieses erste Verlängerungsteil eingepaßten Fingerhutrohre können gegeneinander nicht verschoben werden. Ein anderes, zweites Verlängerungsstück ist so ausgestaltet, daß an seinem Ende die Abstände der Fingerhutrohre voneinander größer sind als an seinem Anfang. Dieses zweite Verlängerungsstück ist durch eine Feder gegen Verdrehung gesichert. Es ist als Kopplungsstück für zwei Führungsrohre mit unterschiedlichen Abständen zwischen den Fingerhutrohren gedacht. Ein Gerät zum Spülen eines Lanzengehäuserohres und zum Ausrichten einer LVD-Lanze in einem Reaktordruckbehälter eines Siedewasserreaktors ist aus der DE-A-2 832 122 nicht bekannt.

Im Laufe des Reaktorbetriebes bilden sich radioaktive Ablagerungen im Reaktordruckbehälter, die sich teilweise in den Lanzengehäuserohren und somit auch an der Lanzendurchführung ablagern. Falls langlebige trockene Lanzen eingebaut sind, die nicht ausgewechselt werden, nehmen die Ablagerungen ständig zu, so daß ein örtlich extrem hoher Strahlenpegel im zeitweise zugänglichen Bereich unterhalb des Reaktordruckbehälters die Folge ist. Eine Reinigung der Lanzengehäuserohre ist aber bisher nicht wirtschaftlich durchführbar, da dafür der Reaktor erheblich länger als zum Brennelementwechsel abgeschaltet und teilweise entladen werden muß. Die Lanzen können nämlich wegen ihres von oben nach unten wachsenden Durchmessers nur bei geöffnetem und geflutetem Reaktordruckbehälter schräg nach oben aus dem Kern herausgezogen werden. Zuvor müssen darüber hinaus die benachbarten Brennelementkästen zur Vermeidung von Beschädigungen entfernt werden. Erst anschließend ist es möglich, eine Lanze anzuheben, so daß der Abschlußflansch durch kontrolliert ablaufendes Reaktorwasser gespült wird, das dann unterhalb des Reaktordruckbehälters aufgefangen werden muß.

Die bisher üblichen nassen Lanzen haben einen runden Querschnitt, so daß beim Einbau keine Winkelorientierung erforderlich ist. Dadurch ist der Einbau unter Wasser problemlos. Die neuen trockenen LVD-Lanzen, die aus Kosten- und Umweltschutzgründen bevorzugt werden, sind jedoch wegen ihrer flüssigkeitsdichten Bauart dicker und stark profiliert. Beispielsweise hat ihr Querschnitt die Form eines Kleeblattes, damit der im Kerngitter vorhandene Raum besser ausgenützt wird. Die trockene LVD-Lanze muß also zum Reaktorkern genau ausgerichtet werden, um Beschädigungen zu vermeiden. Wegen der großen Länge und der Elastizität der Lanzen sind diese in den Reaktordruckbehälter von oben unter Wasser nicht einsetzbar. Es bestünde die Gefahr, daß die profilierten Lanzen beim Ausrichten verdrillt oder verkantet werden und beim Entspannen Beschädigungen der Brennelementkästen verursachen.

Da der konische Dichtungssitz der Lanze mit dem Lanzengewicht von ungefähr 250 N sowie mit dem Druck von ungefähr 50 m Wassersäule belastet ist, würde eine Drehung der Lanze im Dichtungssitz wegen des hohen Drehmomentes die Dichtflächen besonders bei einem restlichen Schmutzeinschluß beschädigen. Dadurch würde eine aufwendige Reparatur erforderlich. Falls hingegen, um die Dichtflächen zu schonen, die Lanze zum Drehen angehoben würde, wäre das Montagepersonal durch herausspritzendes kontaminiertes Reaktorwasser gefährdet.

Ein Spülvorgang mit den bisher bekannten Mitteln ist also wirtschaftlich nicht durchführbar. Er würde termingebundene Arbeiten an der Druckgefäßoberseite verzögern und behindern.

Der Erfindung liegt die Aufgabe zugrunde, ein Gerät zu entwickeln, das bei geschlossenem, drucklosem Reaktordruckbehälter das Spülen der Lanzengehäuserohre erstmals ermöglicht und darüber hinaus eine Einrichtung zum Ausrichten der trockenen LVD-Lanzen zum Reaktorkern aufweist.

Die Aufgabe wird erfindungsgemäß dadurch gelöst, daß das Gerät ein rohrförmiges Gehäuse hat, das den aus dem Reaktordruckbehälter herausragenden und durch ein Lanzenschutzrohr abgedichteten Teil der Lanze von unten umgibt und am Abschlußflansch befestigbar ist, und daß ein Kolben im Gehäuse unterhalb der abgedichteten Lanze vertikal verschiebbar und drehbar angeordnet ist.

Durch dieses Gerät wird zunächst die Lanzendurchführung und das anmontierte Lanzenschutzrohr am Abschlußflansch druckdicht umschlossen. Dann wird der Kolben im Gehäuse von Hand verschoben bzw. angehoben, bis er fühlbar das untere Ende des Lanzenschutzrohres berührt. Anschließend wird bei der trockenen Lanze der Kolben gedreht, bis er am unteren Ende des Lanzenschutzrohres einrastet. Danach wird der Kolben zusammen mit der Lanze vertikal nach oben gedrückt. Die Lanze wird dadurch aus ihrem Sitz im Abschlußflansch um ein kurzes Wegstück herausgehoben, so daß Reaktorwasser ausläuft und das Lanzengehäuserohr sowie der Dichtsitz der Lanze gespült wird. Nach Beendigung des Spülvorganges wird die Lanze mit dem erfindungsgemäßen Gerät wieder im Dichtsitz abgesetzt. Die trockene Lanze wird zuvor, falls nötig, durch Drehen des Kolbens exakt zum Reaktorkern ausgerichtet.

Mit dem erfindungsgemäßen Gerät wird der Vorteil erzielt, daß in einem Reaktordruckbehälter eingefügte Lanzen nach Abschaltung auch bei geschlossenem Reaktordruckbehälter von Verunreinigungen befreit und anschließend zuverlässig wieder im Abschlußflansch druckdicht angeordnet werden. Arbeiten oberhalb des Reaktors werden nicht behindert. Das erfindungsgemäße Gerät gewinnt dadurch an Bedeutung, daß zunehmend trockene LVD-Lanzen verwendet werden. Während bei jedem Wechsel einer kurzlebigen Lanze gleichzeitig ein Spülvorgang erfolgt, müssen die langlebigen trockenen LVD-Lanzen in bestimmten Abständen gespült werden, was vorteilhaft mit dem erfindungsgemäßen Gerät durchführbar ist.

Für trockene LVD-Lanzen weist der Kolben des Gerätes beispielsweise einen Mitnehmerstift auf, der mit einer Nut im unteren Ende des Lanzenschutzrohres mechanisch zusammenwirkt. Hierzu genau fluchtend ist im oberen Ende des Lanzenschutzrohres ein Kugelstück angeformt, das in einer Markierungsnut in der Lanzendurchführung eingreift. Dadurch werden Bewegungen des Kolbens über das Lanzenschutzrohr, das ursprünglich nur zur Abdichtung bei der Montage diente, exakt auf die Lanze übertragen.

Zum Anheben und Absenken der Einheit aus Kolben, Schutzrohr und Lanze ist das Gerät mit einer Überwurfmutter ausgestattet, die den Kolben unterstützt und mit einem Gewinde an der Außenfläche des Gerätegehäuses zusammenwirkt. Diese Überwurfmutter ist mit Griffen versehen. Hiermit wird der Vorteil erzielt, daß die Lanze, trotz der Belastung mit ca. 50 m Wassersäule und ihres Eigengewichtes con ca. 250 N stets mit geringem Kraftaufwand ohne Werkzeug feinfühlig angehoben wird.

Im Kolben des Gerätes befindet sich ein vertikaler Durchlaß für Reaktorwasser, der durch ein Schnellverschlußventil, wie z. B. ein Kugelventil, abschließbar ist. Hiermit wird der Strom des zum Spülen der Lanze ablaufenden Reaktorwassers reguliert. Wenn nur noch sauberes Wasser abfließt, wird die Lanze wieder im Dichtsitz abgesetzt.

Damit dabei die trockene LVD-Lanze exakt ausgerichtet bleibt bzw. ausgerichtet wird, ist am Kolben des Gerätes z. B. ein Teleskopklapphebel angeordnet. Mit diesem relativ langen Zeigerhebel wird die trockene Lanze, falls nötig, vor dem Absetzen geringfügig gedreht, wodurch ein exaktes Ausrichten zur Geometrie des Reaktorkernes bzw. der Brennelementkästen gewährleistet ist. Die ausgerichtete Lanze wird dann im Abschlußflansch abgesetzt, indem die Überwurfmutter, die den Kolben des Gerätes unterstützt, nach unten geschraubt wird. Anschließend wird das Gerät entwässert und nach der Dichtheitsprüfung vom Abschlußflansch gelöst.

Mit der Erfindung wird insbesondere der Vorteil erzielt, daß trockene LVD-Lanzen, die im Reaktor für die gesamte Betriebszeit funktionsfähig bleiben, selbst in bereits kontaminierte Anlagen nachrüstbar sind. Dadurch werden unwirtschaftliche Abschaltzeiten verkürzt und der Anfall von hochradioaktivem Schrott wird drastisch reduziert.

Die Erfindung wird nun anhand der Zeichnung näher erläutert:

Fig. 1  zeigt einen Reaktordruckbehälter eines Siedewasserreaktors mit eingebauter LVD-Lanze.

Fig. 2  zeigt in vergrößertem Maßstab einen Teil der LVD-Lanze mit Verriegelungszapfen.

Fig. 3  zeigt als Querschnitt eine trockene LVD-Lanze im Kerngitter.

Fig. 4  zeigt in vergrößertem Maßstab eine Durchführung der LVD-Lanze durch die untere Gitterplatte.

Fig. 5  zeigt als Querschnitt eine trockene LVD-Lanze im Lanzengehäuserohr.

Fig. 6  zeigt in vergrößertem Maßstab Abschlußflansch und Durchführung.

Fig. 7 A, B, zeigt das erfindungsgemäße Gerät zur Montage einer trockenen LVD-Lanze und zum Spülen des Gehäuserohres.

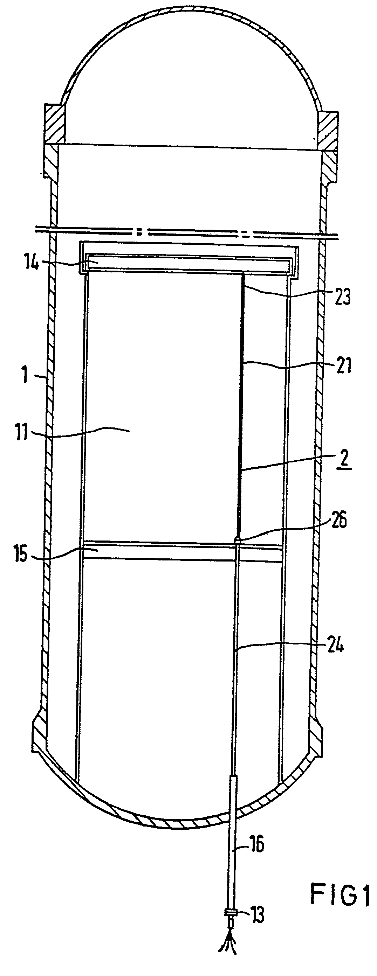

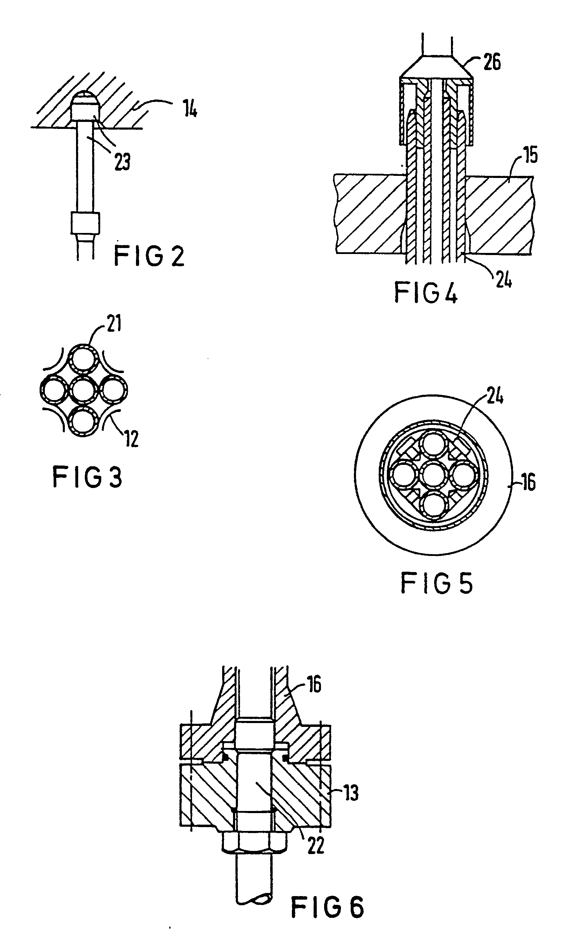

In einem Reaktordruckbehälter 1 eines Siedewasserreaktors nach Fig. 1 sind im Reaktorkern 11 trockene LVD-Lanzen 2 angeordnet, die Detektoren zum Messen der Neutronenflußdichte enthalten. Diese Detektoren sind über Kabel mit einem Rechner verbunden, der die Meßwerte der 100 bis 200 Detektoren verarbeitet. In einer trockenen LVD-Lanze 2 sind vier Detektoren übereinander angeordnet. Sie sind zunächst von druckdichten, trockenen Fingerhutrohren umgeben und an einem sogenannten Eichrohr befestigt. Ein umhüllendes oberes Stützrohr 21 hat einen kleeblattförmigen Querschnitt, der in Fig. 3 dargestellt ist. Dadurch ist die trockene Lanze 2 mit ihrer relativ großen Querschnittsfläche im engen Wasserspalt des Kerngitters 12 einsetzbar. In Fig. 1 ist zur Vereinfachung nur eine trockene LVD-Lanze 2 im Reaktordruckbehälter 1 dargestellt.

Die Lanze 2 wird in den geöffneten Reaktordruckbehälter 1 von oben eingesetzt. Ihr oberes Ende wird in der oberen Kerngitterplatte 14 mit einem nach oben federnden Verriegelungszapfen 23 nach Fig. 2 gehalten. Unterhalb der unteren Kerngitterplatte 15 ist die Lanze 2 nach den Fig. 4 und 5 von einem unteren Stützrohr 24 mit rundem Querschnitt umschlossen, das durch eine Manschette 26 am oberen Stützrohr 21 angebunden ist. Im Boden des Reaktordruckbehälters 1 ist nach Fig. 1 ein Lanzengehäuserohr 16 druckdicht angeordnet, in das die Lanze 2 nach Fig. 5 einführbar ist. Sie ist dort mit einer Lanzendurchführung 22 nach Fig. 6 durch einen Abschlußflansch 13 druckdicht aus dem Lanzengehäuserohr 16 herausgeführt und verschraubt gehalten. Im Reaktordruckbehälter 1 bilden sich während der Betriebszeit Ablagerungen, die auch in das Lanzengehäuserohr 16 sowie in den Bereich des Abschlußflansches 13 und der Lanzendurchführung 22 gelangen.

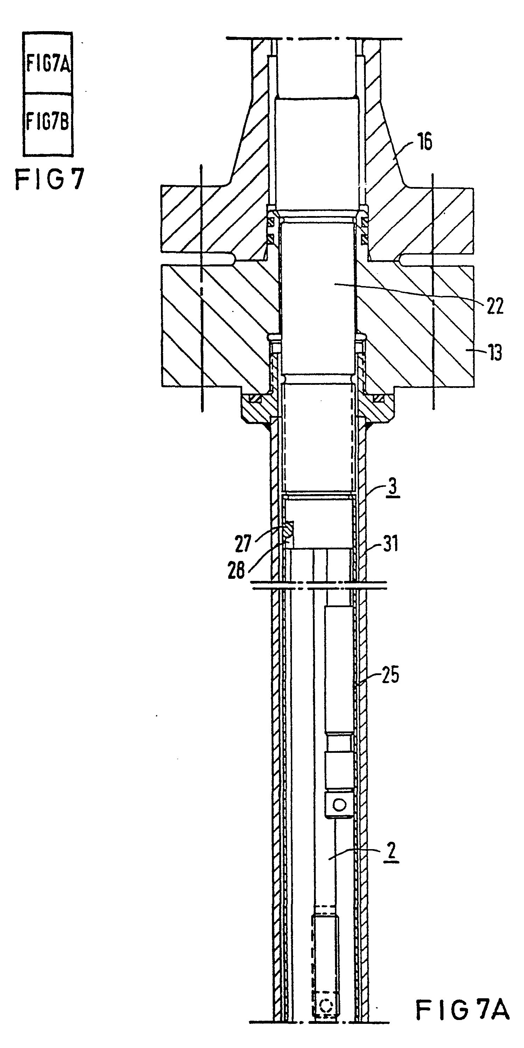

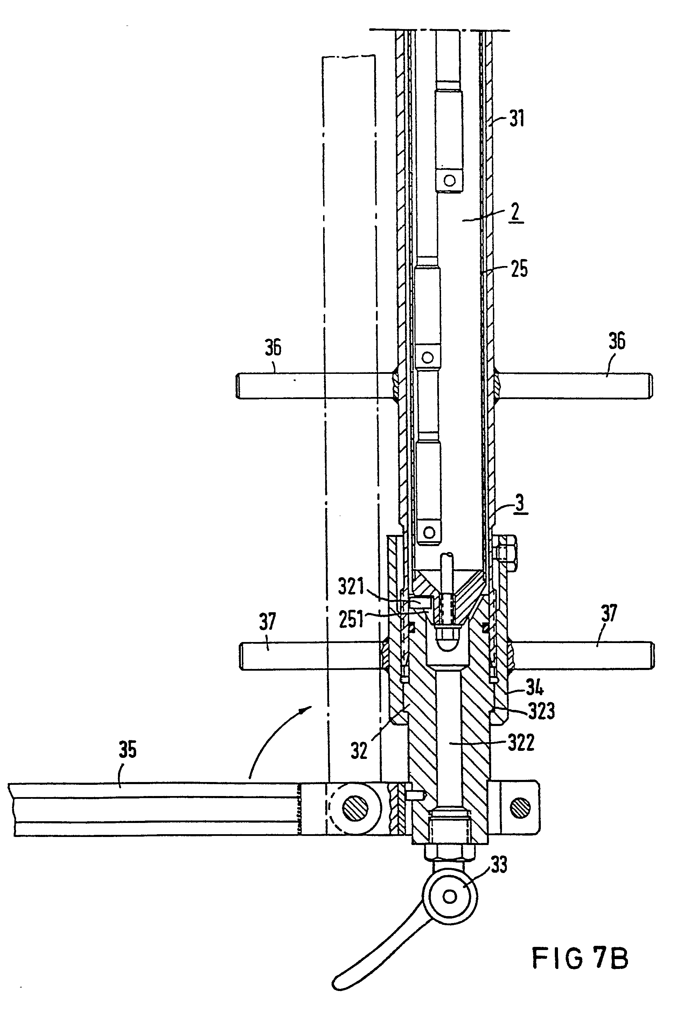

Zur Reduzierung der Strahlung im zugänglichen Bereich unterhalb des Reaktordruckbehälters 1 wird die Lanze 2 durch das erfindungsgemäße Gerät 3 nach Fig. 7 angehoben, gespült und wegen des Kleeblattprofils des oberen Schutzrohres 21 anschließend wieder ausgerichtet und mit der Lanzendurchführung 22 im Dichtsitz des Abschlußflansches 13 abgesetzt.

Das erfindungsgemäße Gerät 3 zur Montage von trockenen Lanzen 2 und zum Spülen der Lanzengehäuserohre 16 hat ein rohrförmiges Gehäuse 31, das mit radialem Spiel den aus dem Abschlußflansch 13 am Reaktordruckbehälter 1 herausragenden Teil der Lanze 2 umgibt, die dort durch ein Lanzenschutzrohr 25 geschützt ist. Das Gerät wird von unten über das Lanzenschutzrohr 25 geführt und am Abschlußflansch 13 druckdicht befestigt.

Im Gehäuse 31 des Gerätes 3 ist unterhalb der Lanze 2 ein Kolben 32 verschiebbar und drehbar angeordnet. Am Kolben 32 ist ein Mitnehmerstift 321 befestigt, der in eine Nut 251 im Lanzenschutzrohr 25 einrastet wenn der Kolben 32 von Hand angehoben und gedreht wird. Hierzu genau fluchtend ist im oberen Ende des Lanzenschutzrohres 25 ein Kugelstück 27 angeformt, das in eine Markierungsnut 28 in der Lanzendurchführung 22 eingreift. Hierdurch werden die Bewegungen des Kolbens 32 exakt auf die Lanze 2 übertragen. Im Kolben 32 befindet sich in der Achse des Gerätes 3 ein Durchlaß 322 für Reaktorwasser, der durch ein Kugelventil 33 abschließbar ist. Der Kolben 32 ist an einer Schulter 323 durch eine Überwurfmutter 34, die mit einem Gewinde an der Außenfläche des Gehäuses 31 zusammenwirkt, unterstützt. Durch Drehen der Überwurfmutter 34 werden der Kolben 32 und die mit ihm verbundene Lanze 2 aus dem Dichtsitz im Abschlußflansch 13 angehoben. Dadurch fließt Reaktorwasser durch den Spalt zwischen Lanzendurchführung 22 und Abschlußflansch 13 in den Raum zwischen dem Lanzenschutzrohr 25 und dem Gehäuse 31 des Gerätes 3. Auf diese Weise wird das Lanzengehäuserohr 16 und der Dichtbereich des Abschlußflansches 13 gespült und von Ablagerungen befreit. Das Wasser wird durch den Durchlaß 322 im Kolben 32 geleitet und am Kugelventil 33 stoßweise abgelassen. Dadurch werden auch festsitzende Verunreinigungen abgelöst. Mit dem Kugelventil 33 wird der Wasserfluß geregelt, bis nur noch sauberes Wasser abfließt.

Trockene LVD-Lanzen 2 dürfen beim Spülen nicht verdreht werden, da sie sonst bei beladenem Kern 11 benachbarte Brennelementkästen des Kerngitters 12 beschädigen würden. Daher wird nach dem Spülvorgang die Lanze 2 mit dem erfindungsgemäßen Gerät 3 genau zum Kerngitter 12 ausgerichtet. Dazu ist am Kolben 32 des Gerätes 3 ein Klapphebel 35 angeordnet, der zum leichteren Transport des Gerätes 3 parallel zum Gehäuse 31 angeordnet ist. Dieser zeigerartige Klapphebel 35, der teleskopartig verlängerbar ist, wird zum exakten Ausrichten der trockenen Lanze 2 in eine Stellung senkrecht zum Gehäuse 31 des Gerätes 3 geklappt. Über diesen langen Hebelarm wird die Lanze 2 unter Einbeziehung markanter Peilpunkte an der Reaktorunterseite in bezug auf die Geometrie des Reaktorkerns 11 exakt ausgerichtet. Anschließend wird die Lanze 2 durch Drehen der Überwurfmutter 34 und Absenken des Kolbens 32 in ihrem Dichtsitz abgesetzt. Nach dem Entwässern des Gerätes 3 am Kugelventil 33 und einer Dichtheitskontrolle werden das erfindungsgemäße Gerät 3 und das Lanzenschutzrohr 25 demontiert und die Lanze 2 mit einer Mutter gesichert. Das Gerät 3 ist sofort wieder an anderer Stelle einsatzbereit.

Zur besseren Handhabung des Gerätes 3 und zur Montage ohne zusätzliches Werkzeug sind am Gehäuse 31 und an der Überwurfmutter 34 Griffe 36 und 37 angeformt.

Mit dem geschilderten Gerät 3 ist erstmals das exakte Ausrichten einer trockenen LVD-Lanze 2, sowie das Spülen von Lanzengehäuserohren 16, die trockene oder nasse LVD-Lanzen enthalten, bei geschlossenem Reaktordeckel und geflutetem Kern 11 durchführbar.

**Liste der Bezugszeichen**

| | |
|---|---|
| 1 | Reaktordruckbehälter |
| 11 | Reaktorkern |
| 12 | Kerngitter |
| 13 | Abschlußflansch |
| 14 | obere Kerngitterplatte |

15 untere Kerngitterplatte
16 Lanzengehäuserohr
2 trockene LVD-Lanze
21 oberes Stützrohr
22 Lanzendurchführung
23 Verriegelungszapfen
24 unteres Stützrohr
25 Lanzenschutzrohr
251 Nut im Lanzenschutzrohr
26 Manschette
27 Kugelstück im Lanzenschutzrohr
28 Markierungsnut in der Lanzendurchführung
3 Gerät zur Montage von trockenen LVD-
Lanzen und zum Spülen von
Lanzengehäuserohren
31 Gehäuse des Gerätes
32 Kolben
321 Mitnehmerstift am Kolben
322 Durchlaß für Reaktorwasser
323 Schulter
33 Kugelventil
34 Überwurfmutter
35 Klapphebel am Kolben
36 Griffe am Gehäuse
37 Griffe an der Überwurfmutter

**Patentansprüche**

1. Gerät zum Spülen eines Lanzengehäuserohres (16) und zum Ausrichten einer trockenen LVD-Lanze (2) in einem Reaktordruckbehälter (1) eines Siedewasserreaktors, die mit einer druckdichten Lanzendurchführung (22) aus einem Abschlußflansch (13) am Lanzengehäuserohr (16) des Reaktordruckbehälters (1) teilweise herausragt, *gekennzeichnet durch* ein rohrförmiges Gehäuse (31), das den aus dem Reaktordruckbehälter (1) herausragenden und durch ein Lanzenschutzrohr (25) abgedichteten Teil der Lanze (2) von unten umgibt und am Abschlußflansch (13) befestigbar ist, und durch einen Kolben (32), der im Gehäuse (31) unterhalb der abgedichteten Lanze (2) vertikal verschiebbar und drehbar angeordnet ist.

2. Gerät nach Anspruch 1, *dadurch gekennzeichnet,* daß der Kolben (32) einen Mitnehmerstift (321) aufweist, der mit einer Nut (251) im Lanzenschutzrohr (25) mechanisch zusammenwirkt.

3. Gerät nach Anspruch 1, *dadurch gekennzeichnet,* daß am Lanzenschutzrohr (25) an der Innenseite des oberen Endes ein Kugelstück (27) angeformt ist, das in eine Markierungsnut (28) in der Lanzendurchführung (22) eingreift.

4. Gerät nach Anspruch 1, *dadurch gekennzeichnet,* daß der Kolben (32) durch eine Überwurfmutter (34) unter stützt ist, die mit einem Gewinde an der Außenfläche des Gehäuses (31) zusammenwirkt.

5. Gerät nach Anspruch 1, *dadurch gekennzeichnet,* daß der Kolben (32) einen Durchlaß (322) für Reaktorwasser aufweist, in dem sich ein Ventil (33) befindet.

6. Gerät nach Anspruch 1, *dadurch gekennzeichnet,* daß am Kolben (32) ein Klapphebel (35) angeordnet ist.

**Claims**

1. Apparatus for cleaning a probe housing tube (16) and for aligning a dry LVD probe (2) in a reactor pressure vessel (1) of a boiling water reactor, which partially projects with a pressure-tight probe bushing (22) from a terminal flange (13) on the probe housing tube (16) of the reactor pressure vessel (1), characterised by a tubular housing (31) which surrounds from below the part of the probe (2), projecting from the reactor pressure vessel (1) and sealed by a probe protective tube (25) and is able to be secured on the terminal flange (13), and by a piston (32) which is arranged in a rotatable and vertically displaceable manner in the housing (31) below the sealed probe (2).

2. Apparatus according to claim 1, characterised in that the piston (32) has a driver pin (321) which cooperates mechanically with a groove (251) in the probe protective tube (25).

3. Apparatus according to claim 1, characterised in that pre-formed on the probe protective tube (25) on the inner side of the upper end there is a spherical piece (27) which engages in a marking groove (28) in the probe bushing (22).

4. Apparatus according to claim 1, characterised in that the piston (32) is supported by a clamping nut (34) which cooperates with a thread on the outer surface of the housing (31).

5. Apparatus according to claim 1, characterised in that the piston (32) has a passage (322) for reactor water, in which a valve is located (33).

6. Apparatus according to claim 1, characterised in that a tilting lever (35) is arranged on the piston (32).

**Revendications**

1. Appareil pour rincer un boîtier-canal (16) d'une lance et pour orienter une lance de détecteur de répartition de puissance à sec (2) dans une cuve (1) sous pression d'un réacteur à eau bouillante, qui fait saillie partiellement, par une traversée de lance (22) tenant la pression, d'une bride de fermeture (13) sur le boîtier canal (16) d'une lance de la cuve (1) sous pression du réacteur, caractérisé par une enveloppe tubulaire (31) qui entoure par le bas la partie de la lance (2), qui fait saillie de la cuve (1) sous pression du réacteur et qui est rendue étanche par un tube de protection (25) de la lance, et qui peut être fixée à la bride de fermeture (13) et par un piston (32) qui est monté coulissant verticalement et tournant dans l'enveloppe (31) en dessous de la lance (2) rendue étanche.

2. Appareil suivant la revendication 1, caractérisé en ce que le piston (32) comporte une tige d'entraînement (321), qui coopère mécaniquement avec une gorge (251) du tube de protection (25) de la lance.

3. Appareil suivant la revendication 1, caractérisé en ce qu'il est formé, sur le tube de protection (25) de la lance, du côté intérieur de l'extrémité supérieure, une pièce sphérique qui pénètre dans une gorge de repérage (28) de la traversée de lance (22).

4. Appareil suivant la revendication 1, caractérisé en ce que le piston (32) est soutenu par un écrou d'accouplement (34), qui coopère avec un filetage de la surface extérieure de l'enveloppe (31).

5. Appareil suivant la revendication 1, caractérisé en ce que le piston (32) comporte un passage (322) pour l'eau du réacteur, dans lequel se trouve une vanne (33).

6. Appareil suivant la revendication 1, caractérisé en ce qu'un levier de basculant (35) est monté sur le piston (32).

FIG1

FIG 2

FIG 3

FIG 4

FIG 5

FIG 6

FIG7A

FIG7B

FIG 7

FIG 7A

16

22

13

3

27

28

31

25

2

5

FIG 7B